(19) Europäisches Patentamt / European Patent Office / Office européen des brevets

(11) **EP 2 148 298 A1**

(12) # EUROPEAN PATENT APPLICATION

(43) Date of publication:
**27.01.2010 Bulletin 2010/04**

(51) Int Cl.:
**G06T 5/00** (2006.01)

(21) Application number: **08161222.8**

(22) Date of filing: **25.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nederlandse Organisatie voor toegepast-natuurwetenschappelijk onderzoek TNO**
**2628 VK Delft (NL)**

(72) Inventors:
• **van Eekeren, Adam Wilhelmus Maria**
  **2593 ZC Den Haag (NL)**
• **Schutte, Klamer**
  **2725 ES Zoetermeer (NL)**

(74) Representative: **Hatzmann, Martin et al**
**Vereenigde**
**Johan de Wittlaan 7**
**2517 JR Den Haag (NL)**

(54) **Apparatus and method for producing improved quality signals**

(57) A signal reconstruction apparatus, such as an image reconstruction apparatus generates a reconstructed location dependent image based on an incoming signal. Successive versions of the reconstructed image signal are iteratively computed, guided by quality improvement according to a quality criterion for said versions that depends on aggregated differences between signal values of the incoming signal and corresponding signal values derived from the reconstructed signal added to a regularization function applied to image gradient size. The regularization function has a derivative of bounded size that varies continuously as a function of gradient size from zero at zero gradient. Changes in the derivate of the regularization function are concentrated in a finite, limited interval of values of gradient sizes.

Fig.2

EP 2 148 298 A1

**Description**

Field of the invention

The invention relates to an apparatus and method that uses incoming signals to produce improved quality signals, such as improved image signals with position dependent pixel values.

Background

For image handling equipment such as camera's, television sets, image recording and image replay equipment it is desirable to produce improved quality images from incoming or stored images. Quality improvements may include increasing the resolution of the images, suppressing noise etc. One known quality improvement technique is called image reconstruction and involves searching for an improved image that results in a quality optimization according to a quality criterion expressed in terms of a sum of differences between pixel values of the incoming image and pixel values of the improved image plus a so-called regularization function. The quality criterion may take the form

$$\text{Sum}\{R(P(r))\} + \text{Sum} \{ P'(r) - M(r) \}^2$$

Herein the sum is taken over the pixel positions "r" in the incoming image M that are used to improve the improved image P. R is the regularization function, which depends on a set of values of the improved image P(r) for different pixel positions "r". M(r) are pixel values of the incoming image and P'(r) are pixel values of a version of the improved image that is used for comparison. In many applications P'(r) may equal P(r), but for example when the improved image P(r) has a higher resolution than the incoming image M, P'(r) may be a filtered and subsampled version of P(r).

The regularization function is often needed because the improved information P(r) contains more information (has more degrees of freedom) than the incoming image M(r), with the result that the task of construction of the improved image P(r) is ill posed. The regularization function provides for a criterion for optimal use of the additional degrees of freedom.

In known image reconstruction techniques the regularization function has been implemented as a sum of squares of total variation values for pixel locations in the improved image, summed over pixel locations in the improved image. The square of the total variation at a pixel location may be taken as the square of the gradient vector of the pixel values at that pixel location. However, this type of regularization function has been found to have the disadvantage that it is not robust to outliers (e.g. strongly erroneous pixel values in the incoming image) and that it has an unnecessarily smoothing effect on the improved image.

As an improvement has been suggested to implement the regularization function using a sum of absolute values of the total variation values for pixel locations in the improved image, instead of a sum of squares. This makes image reconstruction more robust against outliers, as the absolute value does not increase as strongly as the square. However, it has been found that this selection of the regularization function may still lead to sub-optimal reconstruction. A similar problem has been found when reconstruction is applied to sound signals,

Summary

Among others, it is an object to provide for better improvement of signal quality.

A signal processing method according to claim 1 is provided. Herein an incoming signal such as an image signal or a seismic signal for example, is used to compute a reconstructed signal. An iterative computation used wherein successive versions of the reconstructed signal are computed guided by a criterion for the quality of the reconstructed signal. The quality criterion may be used to guide the computation for example in that a derivative of the quality criterion with respect to the reconstructed signal is computed and the derivative is used to compute an update of the current version of the reconstructed signal. Also, values of the quality criterion itself, or part thereof, may be computed to select between different versions of the reconstructed signal.

The quality criterion aggregates differences between signal values of the incoming signal and signal values derived from the reconstructed signal added to a regularization function that is applied to a measure of variation of the signal values of the improved image as a function of location. For the regularization function a function is used that has a derivative of bounded size that varies continuously as a function of the measure of variation from zero at zero measure of variation.

A regularization function that varies proportionally to sqrt ($[\text{grad } I(r)]^2 + a^2$) may be used for example, wherein I(r) is the reconstructed signal and "a" is a parameter. For argument values grad I(r) with a size higher than the parameter "a" asymptotically linear variation is realized, so that the derivatives are bounded by zero and its asymptotic values. For argument values grad I(r) with a size lower than the parameter value "a" a continuous approximately square dependence on the size of grad I(r) is realized, with a derivative that goes to zero smoothly.

The use of a regularization function with bounded derivatives has been found to improve reconstruction of edges in the improved signal. In this way edge reconstruction problems are reduced compared with a quadratic regularization function of grad I(r). The gradual reduction of the derivative for small values of the measure of variation of the reconstructed image has been found to improve robust convergence to a unique improved image. In this way convergence problems with a function proportional to the absolute size of grad I(r), which would result in concentration of the entire change of the derivative at zero gradient of the reconstructed image, are prevented.

More generally, these advantages occur when the derivative of the regularization function with respect to the measure of variation is bounded and the locations of the changes of the derivate occur concentrated at values of the measure of variation that are distributed over a finite interval of small values of the measure of variation. This finite interval with concentrated locations may be defined as the interval that comprises zero measure of variation, and in which a significant fraction, say at least one half, of the variation of the derivative of the regularization function occurs. Distribution of the change of derivative over this finite interval occurs when at all locations in the interval, or at least at a majority of the locations, the second derivative of the regularization function exceeds a finite minimum value that is not excessively less than (say not less than one tenth, and more preferably not less than half) a constant second derivative that would be required to account for the total change of the derivative in the interval. In the case of the regularization function sqrt ([grad I(r)]$^2$ + a$^2$), the value of the parameter "a" determines the size of this interval.

In an embodiment the size of the interval wherein the change of the derivative of the regularization function is concentrated, i.e. if applicable the value of the parameter "a", is selected dependent on noise in the incoming signal. In a further embodiment a size of this noise is estimated and the estimation is used to set the sizes of the interval, so that the interval contains at least a significant part of the noise, e.g. by setting the parameter "a" dependent on the noise amplitude, for example to three times the standard deviation of the noise in the gradient.

Brief description of the drawing

These and other objects and advantages will become apparent from a description of exemplary embodiments, using the following figures.

Figure 1 shows an image processing apparatus
Figure 2 shows a flow-chart of an algorithm for selecting changes of pixel values

Detailed description of exemplary embodiments

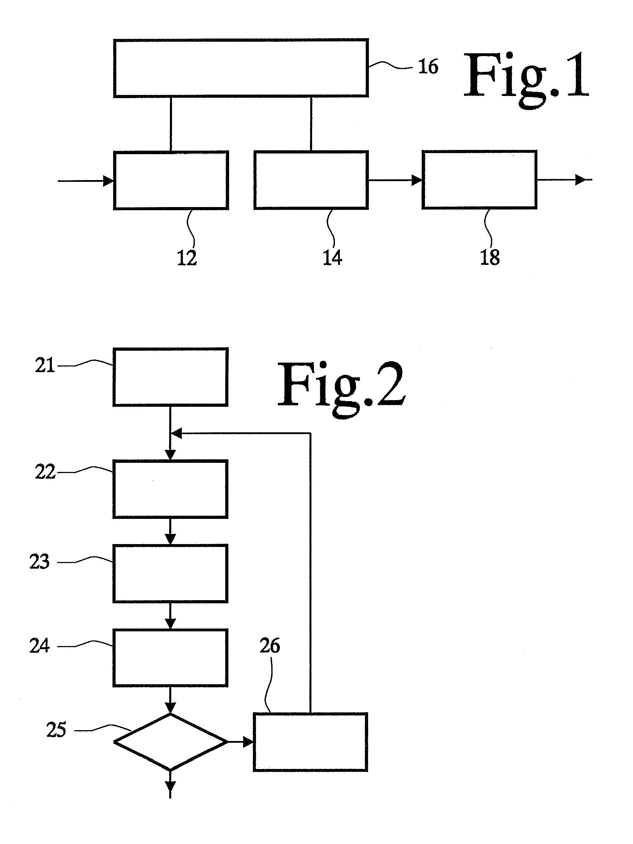

Figure 1 schematically shows an image processing apparatus, comprising a first image memory 12 for an incoming image, a second image memory 14 for a reconstructed image, a computation unit 16 for updates of the reconstructed image and an output driver 18 for using the reconstructed image to drive a display device (not shown). First image memory 12 is coupled to an input of the image processing apparatus. The input may be coupled to a camera (not shown) or other image capturing device. Second image memory 14 is coupled to an output of the image processing apparatus via output driver 19. Computation unit 16 has inputs coupled to first and second image memory 12, 14 and an output coupled to second image memory 14.

In operation image processing apparatus 10 receives an incoming image from its input and stores it in first image memory 12. Computation unit 16 uses the incoming image in an iterative computation of successive versions of an improved image and to write these successive versions into second image memory 14.

The iterative computation aims to minimize a criterion for the improved image. In an embodiment, the criterion has the following form:

$$\text{Sum } [\ (P'(r)\text{-}M(r))^2\ ] + \text{Sum } [F(\text{ grad } P(r)\ ]$$

Herein M(r) are the pixel values of the measured image in first image memory 12, P'(r) are the pixel values determined from the improved image P in second image memory 14 and grad P(r) is a gradient vector of the pixel values of the improved image. The gradient vector may have components determine from to differences between the pixel value P(r) at the pixel location and pixel values at adjacent pixel locations in different directions, but instead a more complex filter function may be used to determine the gradient.

The sums are taken over pixel locations "r" (the first and second sum are not necessarily taken over the same sets of pixel locations: when P has higher resolution than M, the second sum may involve more pixel locations, for example).

Both the function F and its derivative vary continuously as a function of its argument. Continuous variation of a function over a range of argument values means that the variation decreases with decreasing size of the range and that for any small but non-zero variation a corresponding finite range can be indicated wherein the variation is smaller than that small but non-zero variation.

In an embodiment the function F applied to a symbolic vector variable x =(grad P(r)) takes the form

$$F(x)=c*(sqrt(x^2+a^2)-a),$$

wherein a and c are parameters and sqrt is the square root function. This function should be contrasted with the conventional L2 norm, wherein $F(x)=x^2$ and the conventional L1 norm wherein $F(x)=|x|$. As may be noted F(x) has quadratic and linear asymptotic behaviour for small amplitude of "x" and for large amplitude respectively. Hence it asymptotically behaves like the L2 norm for small gradients and like the L1 norm for large gradients.

It should be noted that the derivative of this function $c*(sqrt(x^2+a^2)-a)$ is bounded, in contrast to the derivative of the L2 norm, which grows indefinitely in proportion to x. This results in better preservation of edges. Furthermore it should be noted that two argument regimes of behaviour of the function may be distinguished. The first regime covers an interval with small gradient values, including zero gradient, with a size significantly less than the parameter value "a". The second regime covers large gradient values, with a size significantly larger than the parameter value "a". In the interval with small gradient values, the function has a minimum (zero derivative) for zero size gradient and the first derivative increases gradually for gradients of increasing size. Thus, the changes of the derivative are approximately evenly distributed over the interval with small gradient values, in contrast to the L1 norm, where the change of derivative occurs only for zero measure of variation. This results in improved convergence properties for the iteration. In the second regime the first derivate has little variation, because the function approaches an asymptotically linear behaviour.

The parameter "a" that determines the size of the gradient at the transition between the two regimes may be selected dependent on noise amplitude, In an embodiment the parameter "a" is set to a value between the standard deviation of the noise and ten times the standard deviation, so that F behaves according to its small amplitude regime for the majority of the noise and according to its large amplitude regime for outliers.

The parameter "c" determines the relative weights given to getting a regularized image and to faithfulness to the incoming image M. The value of the parameter "c" may be chosen dependent on the application of the improved image P, with a lower value of a sharp but noisier improved image is needed and a higher value if a less noisy but also less sharp image is needed.

Computation unit 16 need not actually compute the value of the criterion. In an embodiment it suffices to compute derivatives of the criterion with respect to variations of the pixel values P(r) of the improved image. These derivatives may take the form

$$2*Sum[\ (P(r)-M(r))\ ] + Sum[\ F'(\{\ grad\ P(r')\ \})\ *D(r,r')\ ]$$

Herein D(r,r') is the derivative of the gradient with respect to P(r) for those pixel locations r' where the gradient depends on P(r) (typically the pixel location r and a number of surrounding locations). The sum is taken over those pixel locations r'.

It should be noted that at least the term in the sum is non linear function of the pixel values of the improved image P(r), because F is not a linear function. The function serves to give different weights to gradients of different size. For large gradients the term in the sum becomes independent of the gradient and for small gradients it is becomes approximately linear in the gradient. Thus, the relative weight of different gradients is changed.

In another embodiment, the improved image P may have a higher resolution than the incoming image M. In this case the incoming image M(r') may be compared with a filtered and sub-sampled version P' (r") of the improved image. Setting the derivative of a pixel value of this version P' (r") with respect to the pixel value of the improved image P(r) equal to Q(r,r"), the derivatives with respect to the improved pixel values P(r) take the form

$$2*Sum\ [(P'(r'')-M(r'))*Q(r,r'')\ ]$$

$$+\ Sum\ [\ F'(\{\ grad\ P(r')\ \})\ *D(r,r')\ ]$$

Herein the sums are taken over the locations r' and r''. Again it should be noted that at least the term in the sum is non linear function of the pixel values of the improved image P(r), because F is not a linear function.

Computation unit 16 may use any known strategy to select successive versions of the improved image. For example, a set of changes of respective pixel values may be selected in proportion to the derivatives for those pixel values, or at least dependent on the derivatives. The iterative selection of successive versions may be performed using Levenberg-Marquardt optimization.

Figure 2 shows a flow-chart of an exemplary algorithm for computing the improved image P. In a first step 21 computation unit 16 selects an initial version of the improved image P. An image with position independent pixel values may be used for example, or the result of previous processing may be used. In a second step 22, computation unit 16 computes the derivates according to the expression discussed above, using the pixel values of the incoming image M (r) and the current version of the improved image P. In a third step 23, computation unit 16 computes update values for the improved image P based on the computed derivatives. In one embodiment, the update values are taken equal to the derivates multiplied by a factor. In other embodiments, more complicated methods may used and the direction of the update vector relative to the derivatives may be varied.

In a fourth step 24, computation unit 16 adds the updates to the current version of the improved image P, thus producing a next version of the improved image. In a fifth step 25, computation unit 16 tests whether a convergence criterion is satisfied. A simple criterion may be to test whether a predetermined number of iterations has been performed, but alternatively a measure of convergence computed from the derivatives may be compared with a threshold value. In this case fifth step could be performed before third step 23. If the convergence criterion is satisfied, computation unit 16 terminates the iterative process and delivers the improved image. If the convergence criterion is not satisfied, computation unit 16 executes a sixth step 26, preparing a next iteration, for example by adjusting the factor to be used in third step 23, after which computation unit 16 repeats from second step 22 (when fifth step 25 is performed before third step 23 sixth step 26 may be executed after fourth step 24).

It should be emphasized that the algorithm of figure 2 is only one example of an algorithm for determining successive versions of the improved image based on the quality criterion that uses the function F. Other examples may include conjugate gradient optimization, etc.

The use of an optimization criterion of the form

$$Sum\ [\ (P'(r)-M(r))^2\ ]\ +\ Sum\ F(\ \{grad\ P(r)\}\ )$$

combined with a regularization function F of the form

$$F(x)=c*(sqrt(x^2+a^2)-a),$$

Has the effect that edges in the image, for example at transitions between pixel locations foreground objects and background are imaged, will be better preserved than when a function $F(x)=x^2$ is used that increases more rapidly for large values of x. By selecting the value of the parameter "a" smaller than the smallest step size of the edges that should be reconstructed, for example at least three times smaller, the sharpness of these edges is preserved.

On the other hand, the function reduces the risk that the iteration process gets trapped in a local minimum, so that the initial image used in the iterations has a strong effect on the improved image. Compared to a function F(x) = | x | the risk of trapping is reduced already when the value of the parameter "a" is significantly larger (say at least three times larger) than the rounding error of the computation used to compute updates of the improved image. A higher value of the parameter "a" improves the speed of convergence and further reduces the risk of trapping.

In an embodiment a lower limit of the value of the parameter is set in proportion with the iteration step size. This improves concergence speed.

In an embodiment the value of the parameter is set proportional to an input indicating the minimum size of the steps that that should be reconstructed. In another embodiment such an input may be used to set an upper limit for the parameter.

In an embodiment the value of the parameter is set dependent on image noise produced by the source of the image, to a value of at least three times the standard deviation of the image noise and an upper limit less than one third of the smallest size edge that has to be reconstructed. Optionally, the parameter is set to an upper or lower limit if the value derived from the noise is past the upper or lower limit. In a further embodiment, a computation unit 16 is configured to determine an estimated noise amplitude of the incoming image, or of an image or images of a series of images of which the incoming image is part, and to set the value of the parameter "a" dependent on the estimated noise amplitude, for example to at least three times the estimated noise amplitude. In a further embodiment the noise amplitude may be estimated from a spread of pixel values in an image segment without detected edges. This may be used to improve the speed of convergence.

It should be noted that various alternatives are possible for the term $F( \{ grad\ P(r) \} )$. For example one may use a function $F(x)=x^2/2a$ if $abs(x)<a$ and $F(x)=abs(x)-a/2$ if $abs(x)>a$, or a weighted function of $x^2/2a$ and $abs(x)-a/2$ with weights that gradually vanish for absolute values $abs(x)$ of the argument x above and below "a" respectively. As another example, instead of the function $F(x)=c*(sqrt(x^2+a^2)-a)$, which asymptotically grows in proportion to the absolute value of x for large x, a different function may be used that grows more slowly for large x. For example, a function that saturates at a finite value for large x may be used. By keeping the growth of $F(x)$ for large x limited to linear growth or less, edges in the incoming image $M(r)$ can be better preserved.

Similarly, various alternatives exist for the small argument behaviour of the function F. For example, a function

$$F(x)=c * x * arctan(x/a)$$

may be used. Any continuously varying function F may be used that has a bounded derivative and approximately evenly distributed changes of its first derivative in an interval of small gradient sizes, from zero derivate at zero gradient wherein most of the changes of the derivative of F are concentrated. The bounded value of the derivative means that the derivative of the regularization function levels off somewhere in the range of possible gradient values (say by reaching a derivative value more than ninety percent of the maximum possible derivative at a measure of variation that is a fraction of the maximum possible measure of variation, say less than half that maximum possible measure of variation).

These changes of the derivate of the regularization function should occur concentrated in an interval of low gradient values of the improved image and distributed over that at least with a minimum amount of homogeneity over that interval, in the sense that in a significant part of the interval (say in at least half that interval) the size of the second derivate of the function is greater than a level proportional to the total variation of the size of the derivate in the low range from zero to its maximum size. The level may be equal to a tenth of a constant value of the second derivate that would be needed to account for the total variation in the interval. For example, in the case of $F(x)=sqrt\ (x^2+a^2)-a$, the derivative is $x/sqrt\ (x^2+a^2)$ which levels off to one for increasing x, so that the change of the derivative is concentrated in an interval determined by the parameter "a" (e.g. a fraction of $1/sqrt(2) > 70\%$ of the variation of the derivative is concentrated in the interval $0=x-a$). In this interval the second derivative $a^2/(x^2+a^2)^{3/2}$ has a non-zero value everywhere, exceeding a fraction of half of the constant derivate $1/a*sqrt(2)$ needed to provide the total variation from $0-1/sqrt(2)$ of the derivative in the interval.

As mentioned the interval in which the change of the derivative of the regularization function is concentrated should preferably contain the gradient values of the improved image that are due to rounding errors in the computation of the improved image and more preferably this interval should contain a significant part of the noise in the gradient due to noise (or signal variation in regions without relevant edges) in the incoming image. This improves convergence.

Although a function F dependent on the gradient $grad(P(r))$ has been used, it should be understood that other dependencies on the pixel values of the improved image may be used. For example, a function of the Laplacian instead of the gradient may be used. As long as the term with the function f adds weight against unnecessary variation of $P(r)$ as a function of pixel position, limits the weight assigned to large (edge-related) variation and varies continuously in a range of values corresponding to noise any term may be used.

Although an example has been given for a simple optimization criterion,

$$Sum\ \ [\ (P'(r)-M(r))^2\ ] + Sum\ F(\ \{grad\ P(r)\}\ )$$

it should be understood that a more complex criteria may be used. For example a term $f*Sum[\ (P(r)-P_0(r))^2\ ]$ may be added, when the incoming images is used to augment an initial image $P_0$. The initial image may have been obtained using previously received incoming images.

Although an application to an iterative image reconstruction has been shown, it should be realized that alternatively other signals, a video signal, wherein P depends on both position and time, or a three dimensional signal such as a tomographic image signal, or audio signals may be improved or a time dependence of image signals can be improved in this way.

**Claims**

1. A signal processing method for generating a reconstructed, location dependent signal, comprising

   - receiving an incoming signal represented by a set of signal values;
   - iteratively computing successive versions of the reconstructed signal, guided by quality improvement according to a quality criterion for said versions that depends on aggregated differences between signal values of the incoming signal and corresponding signal values derived from the reconstructed signal added to a regularization function applied to a measure of variation of the reconstructed signal as a function of the location,
   - wherein the regularization function has a derivative of bounded size that varies continuously as a function of the measure of variation from zero at zero measure of variation.

2. A signal processing method according to claim 1, wherein the regularization function varies in proportion to a difference between a square root of a sum of a square of the measure of variation plus a square of a parameter.

3. A signal processing method according to any one of the preceding claims, wherein the regularization function concentrates measure of variation dependent changes in the derivate of the regularization function in an interval of values of the measure of variation, the method comprising receiving an input indicating a minimum step size that should be reconstructed and setting the size of said interval dependent on said input.

4. A signal processing method according to any one of the preceding claims, wherein the regularization function concentrates measure of variation dependent changes in the derivate of the regularization function in an interval of values of the measure of variation that contains at least the standard deviation of the effect of noise in the incoming signal on the measure of variation.

5. A signal processing method according to claim 4, comprising measuring the noise amplitude of the signal, or of at least one further signal in a series of signals that comprises the signal, and adapting the regularization function to set the size of the interval dependent on the measured noise amplitude.

6. A signal processing method according to any one of claims 1 to 5, wherein the incoming signal and the reconstructed signal are image signals.

7. A signal processing apparatus for generating a reconstructed, location dependent signal, the signal processing apparatus comprising an input for receiving a measured incoming signal, a first image memory region for storing the incoming signal, a second image memory region for storing successive versions of an reconstructed image and a computation circuit, wherein the computation circuit is configured to

   - iteratively compute successive versions of the reconstructed signal, guided by quality improvement according to a quality criterion for said versions that depends on aggregated differences between signal values of the incoming signal and corresponding signal values derived from the reconstructed signal added to a regularization function applied to a measure of variation of the reconstructed signal as a function of the location,
   - wherein the regularization function has a derivative of bounded size that varies continuously as a function of the measure of variation from zero in the case of a zero measure of variation.

8. A signal processing apparatus according to claim 7, wherein the regularization function varies in proportion to a difference between a square root of a sum of a square of the measure of variation plus a square of a parameter.

9. A signal processing apparatus according to claim 7 or 8, wherein the regularization function concentrates measure of variation dependent changes in the derivate of the regularization function in an interval of values of the measure of variation, the apparatus having an input for receiving an input indicating a minimum step size that should be reconstructed, the computation circuit being configured to set the size of said interval dependent on said input.

**10.** A signal processing apparatus according to claim 7, wherein the regularization function concentrates measure of variation dependent changes in the derivate of the regularization function in an interval of values of the measure of variation that contains at least the standard deviation of the effect of noise in the incoming signal on the measure of variation.

**11.** A signal processing apparatus according to claim 8 wherein the computation circuit is configured to estimate the noise amplitude of the incoming signal or of at least one further signal in a series of signals that comprises the signal, and to adapting the regularization function to set the size of the interval dependent on the measured noise amplitude.

**12.** A signal processing apparatus according to any one of claims 7 to 11, comprising an image capturing device coupled to the first memory region for supplying the incoming signal, representing a captured image.

**13.** A computer program product, comprising a program of instructions that, when executed by a programmable computer, will cause the programmable computer to perform the method of any one of claims 1 to 6.

Fig.1

Fig.2

# EUROPEAN SEARCH REPORT

**Application Number**

EP 08 16 1222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROULLOT E ET AL: "Modeling anisotropic undersampling of magnetic resonance angiographies and reconstruction of a high-resolution isotropic volume using half-quadratic regularization techniques" SIGNAL PROCESSING, ELSEVIER SCIENCE PUBLISHERS B.V. AMSTERDAM, NL, vol. 84, no. 4, 1 April 2004 (2004-04-01), pages 743-762, XP004495319 ISSN: 0165-1684 * abstract * * sections "2.2. Combining the undersampled volumes", "3.2.1. Fidelity to the data", "3.2.2. Regularization term" * * page 753, left-hand column, lines 14,15 * * page 754, right-hand column, lines 1-5 * * page 755, left-hand column, line 13 - right-hand column, line 5 * * figure 2 * | 1,4-7, 10-13 | INV. G06T5/00 |
| X | XIAO-QUN ZHANG ET AL: "Constrained Total Variation Minimization and Application in Computerized Tomography" ENERGY MINIMIZATION METHODS IN COMPUTER VISION AND PATTERN RECOGNITION LECTURE NOTES IN COMPUTER SCIENCE;;LNCS, SPRINGER, BERLIN, DE, vol. 3757, 1 January 2005 (2005-01-01), pages 456-472, XP019024154 ISBN: 978-3-540-30287-2 * title * * abstract * * section "1.1 The Total Variation and the Rudin-Osher-Fatemi Approach" * * page 460, lines 2-5 * * page 461, lines 16-18 * * page 462, lines 9,10 * | 1,2,6-8, 12,13 | TECHNICAL FIELDS SEARCHED (IPC) G06T |

-/--

The present search report has been drawn up for all claims

| Place of search | Date of completion of the search | Examiner |
|---|---|---|
| Munich | 15 December 2008 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office
Europäisches
Patentamt
European
Patent Office
Office européen
des brevets

## EUROPEAN SEARCH REPORT

Application Number

EP 08 16 1222

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALLAIN M ET AL: "Three-dimensional edge-preserving image enhancement for computed tomography" IEEE TRANSACTIONS ON MEDICAL IMAGING, IEEE SERVICE CENTER, PISCATAWAY, NJ, US, vol. 22, no. 10, 1 October 2003 (2003-10-01), pages 1275-1287, XP011101826 ISSN: 0278-0062 * abstract * * page 1276, right-hand column, line 33 - page 1277, right-hand column, line 9 * * page 1278, left-hand column, lines 3-8 * * page 1279, left-hand column, lines 1-18 * * section "V.B. Real CT Images" * ----- | 1,6,7, 12,13 | |

TECHNICAL FIELDS
SEARCHED     (IPC)

The present search report has been drawn up for all claims

| Place of search | Date of completion of the search | Examiner |
|---|---|---|
| Munich | 15 December 2008 | Eckert, Lars |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)